# EUROPÄISCHE PATENTSCHRIFT

(11) **EP 2 432 666 B1**
(45) Veröffentlichungstag und Bekanntmachung des Hinweises auf die Patenterteilung: **14.05.2014**
(21) Anmeldenummer: 10726006.9
(22) Anmeldetag: 12.05.2010
(51) Int. Cl.: B60R 21/20, B60R 21/2338, F16B 5/06

(54) **BEFESTIGUNGSELEMENT UND VERFAHREN ZUM BEFESTIGEN EINES GASSACKS EINES FAHRZEUGINSASSEN-RÜCKHALTESYSTEMS AN EINER FAHRZEUGSTRUKTUR**
FASTENING ELEMENT AND METHOD FOR FASTENING AN AIRBAG OF A VEHICLE OCCUPANT RESTRAINT SYSTEM TO A VEHICLE STRUCTURE
ÉLÉMENT D'ATTACHE ET PROCÉDÉ POUR ATTACHER UN COUSSIN GONFLABLE D'UN SYSTÈME DE RETENUE D'OCCUPANT DE VÉHICULE À UNE STRUCTURE DE VÉHICULE

(30) Priorität: 18.05.2009 DE 102009022044
(43) Veröffentlichungstag der Anmeldung: 28.03.2012
(73) Patentinhaber: Takata AG, 63743 Aschaffenburg (DE)
(72) Erfinder: GLÖCKLER, Oliver, 89278 Nersingen (DE)
(74) Vertreter: Staroske, Sandro
(86) Internationale Anmeldenummer: PCT/EP2010/056523
(87) Internationale Veröffentlichungsnummer: WO 2010/133490

(56) Entgegenhaltungen:
- EP-A2- 1 564 083
- DE-A1-102007 007 781
- US-A- 3 774 936
- US-A1- 2003 178 832
- US-A1- 2008 106 073

## Beschreibung

Die Erfindung betrifft ein Befestigungselement zum Befestigen eines Gassacks eines Fahrzeuginsassen-Rückhaltesystems an einer Fahrzeugstruktur gemäß Anspruch 1 sowie ein Verfahren zum Befestigen eines Gassacks an einer Fahrzeugstruktur gemäß Anspruch 15.

Gassäcke (insbesondere Vorhanggassäcke) eines Fahrzeuginsassen-Rückhaftesystems werden beispielsweise über Verbindungselemente in Form von Befestigungsbändern mit einer Fahrzeugstruktur verbunden. Hierzu wird z.B. ein an der Fahrzeugstruktur (etwa einem Teil der Fahrzeugkarosserie) festlegbares Befestigungselement verwendet, an dem eine vernähte Schlaufe des Verbindungsbandes festgelegt ist.

In dem Dokument EP 1 564 083 A2 wird eine Möglichkeit zur Befestigung eines Gassacks an einer Rahmenstruktur eines Fahrzeugs beschrieben. Es ist ein Befestigungselement offenbart, das eine Durchführöffnung zum Hindurchführen eines Verbindungselementes in Form eines Bandes aufweist, wobei über das Verbindungselement der Gassack mit der Fahrzeugstruktur verbunden werden soll. Das Befestigungselement weist einen Vorsprung auf, an dem das Band anliegt, wonach das Band an einem Ende eine Tasche ausbildet, die an dem Vorsprung eingehängt wird, so dass das Band mit einem Teilabschnitt an dem Vorsprung anliegt. Mittels eines Fixierungsmittels in Form eines Stiftes, das durch eine Öffnung in dem Befestigungselement hindurch und in eine Öffnung in die Fahrzeugseitenstruktur eingreift, wird das Befestigungselement an der Fahrzeugstruktur fixiert.

Das Dokument US 20031178832 A1 beschreibt eine Befestigungsmöglichkeit zur Befestigung eines Gassacks an einer Fahrzeugstruktur. Das hier verwendete Befestigungselement in Form eines Befestigungsbandes weist an einem Ende eine abstehende Lasche auf, die eine Durchgangsöffnung ausbildet, durch die das andere Ende des Befestigungsbandes hindurchgeführt werden kann. Das hindurchzuführende Ende des Befestigungsbandes besitzt seitliche Vorsprünge, die in die Lasche hineingreifen und somit das Befestigungsband festlegen. Eine Fixierung des Befestigungsbandes an der Fahrzeugstruktur erfolgt mittels Fixierungsmitteln.

In dem Dokument US 3 774 936 A wird ein Befestigungselement beschrieben, das zwei Schenkel sowie ein zwischen diesen Schenkeln angeordnetes Zahnsegment aufweist. Die beiden Schenkel sind über eine Krümmung miteinander verbunden, wobei zwischen den Zähnen des Zahnsegmentes und der Krümmung eine Öffnung gebildet ist, durch die ein Verbindungselement hindurchgeführt ist, das zum Fixieren eines Gassacks dient. Das Befestigungselement ist über eine Schraube an einer Fahrzeugstruktur befestigt.

Das von der vorliegenden Erfindung zu lösende Problem besteht darin, ein Befestigungselement zu schaffen, an dem ein Verbindungselement in möglichst einfacher Weise befestigbar ist.

Dieses Problem wird durch das Befestigungselement mit den Merkmalen gemäß Anspruch 1 sowie durch das Verfahren mit den Merkmalen gemäß Anspruch 15 gelöst. Weiterbildungen der Erfindung sind in den abhängigen Ansprüchen angegeben.

Danach wird ein Befestigungselement zum Befestigen eines Gassacks eines Fahrzeuginsassen-Rückhaltesystems an einer Fahrzeugstruktur bereitgestellt, mit
- Fixierungsmitteln, über die das Befestigungselement in einer Befestigungsöffnung der Fahrzeugstruktur fixierbar ist; und
- mindestens einer Durchführöffnung zum Hindurchführen eines Verbindungselementes, über das der Gassack mit der Fahrzeugstruktur verbunden werden soll, sowie
- mindestens einen Vorsprung, an dem ein durch die Durchführöffnung hindurchgeführtes Verbindungselement des Gassacks anliegt und der einem Herausziehen des Verbindungselementes aus der Durchführöffnung entgegenwirkt, wobei das Befestigungselement (1) einstückig ausgebildet ist.

Wie eingangs bereits erwähnt, handelt es sich bei dem Verbindungselement insbesondere um ein Verbindungsband (insbesondere in Form eines Spannbandes), dessen eines Ende mit dem Gassack (z. B. einstückig) verbunden ist und dessen anderes, freies Ende über das Befestigungselement an einer Fahrzeugstruktur (insbesondere in Form eines Teils der Fahrzeugkarosserie) festgelegt werden soll. Allerdings kann das erfindungsgemäße Befestigungselement im Prinzip auch mit nicht bandförmigen Verbindungselementen verwendet werden.

Insbesondere wird das erfindungsgemäße Befestigungselement zur Befestigung von Vorhanggassäcken an einer Fahrzeugseitenstruktur, wie z. B. A-Säule, C-Säule und/oder einem Dachrahmen des Fahrzeugs, benutzt, auch wenn das Befestigungselement natürlich nicht auf diese Verwendung beschränkt ist.

Das Verbindungselement, das zusammen mit dem Befestigungselement benutzt wird, ist z.B. aus einem textilen Gewebe (beispielsweise einer oder aus mehreren Lagen eines Gassackmaterials) oder einem anderen, insbesondere elastischen Material ausgebildet, z.B. aus einem nicht textilen Material wie Gummi oder einem Kunststoff.

Die Fixierungsmittel des Befestigungselementes ermöglichen insbesondere eine lösbare Verbindung des Befestigungselementes mit der Fahrzeugstruktur. Dennoch sind die Fixierungsmittel des Befestigungselementes insbesondere so ausgebildet, dass sie einem Entfernen des Befestigungselementes aus der Befestigungsöffnung der Fahrzeugstruktur entgegenwirken, d. h. zum Entfernen des Befestigungselementes eine bestimmte Kraft und/oder Betätigung der Fixierungsmittel erfolgen muss, die im normalen Betrieb eines Fahrzeugs, in dem das erfindungsgemäße Befestigungselement angeordnet ist, und auch bei einem Aktivieren des Fahrzeuginsassen-Rückhaltesystems, dessen Bestandteil das Befestigungselement ist, nicht auftritt. Dass das Befestigungselement über die Fixierungsmittel "in" einer Befestigungsöffnung der Fahrzeugstruktur fixierbar ist, umfasst z.B. die Möglichkeit, dass das Befestigungselement über die Fixierungsmittel an einem Rand der Befestigungsöffnung festgelegt werden kann.

Der Vorsprung des Befestigungselementes ist insbesondere so beschaffen, dass es einem unbeabsichtigten Wiederherausziehen des Verbindungselementes aus der Durchführöffnung entgegenwirkt. Beispielsweise blockiert es eine Bewegung entgegen der Einführrichtung des durch die Durchführöffnung hindurch geführten Verbindungselementes. Insbesondere wird über den Vorsprung eine form- oder kraftschlüssige, insbesondere reibschlüssige, Verbindung zwischen dem Befestigungselement und dem Verbindungselement hergestellt.

Gemäß einer Variante der Erfindung steht der (insbesondere zackenartig ausgebildete) Vorsprung von einem Rand der Durchführöffnung ab. Das durch die Durchführöffnung hindurch geführte Verbindungselement drückt im montierten Zustand des Befestigungselementes gegen den Vorsprung, wodurch das Verbindungselement festgehalten wird. Beispielsweise greift der Vorsprung bei einem textilen Verbindungselement in das Gewebe des Verbindungselements ein und blockiert somit ein Herausziehen des Verbindungselementes aus der Durchführöffnung. Die Durchführöffnung kann natürlich so beschaffen sein, dass das Verbindungselement von dem Vorsprung entfernt werden kann, um das Band weiter durch die Durchführöffnung hindurch oder aus der Durchführöffnung wieder heraus zu ziehen.

Beispielsweise erstreckt sich der Vorsprung zur Durchführöffnung hin, wobei er sich insbesondere in einer Ebene mit dem Rand der Durchführöffnung erstreckt. Es ist jedoch auch denkbar, dass der Vorsprung zwar (mit einer Richtungskomponente) zur Durchführöffnung hinweist, jedoch aus der Ebene des Randes der Durchführöffnung abgebogen ist; z.B. in einer Richtung, die im montierten Zustand des Befestigungselementes zur Fahrzeugstruktur hin weist oder in einer Richtung, die im montierten Zustand des Befestigungselementes von der Fahrzeugstruktur weg weist.

Es ist jedoch auch denkbar, dass der Vorsprung des erfindungsgemäßen Befestigungselementes nicht an dem Rand der Durchführöffnung ausgebildet ist, sondern z.B. beabstandet zu der Durchführöffnung angeordnet ist. Beispielsweise steht der Vorsprung von einem durchgehenden Abschnitt des Befestigungselementes ab, über den das Verbindungselement hinweggeführt werden kann, so dass es an dem Vorsprung anliegt.

Selbstverständlich ist es möglich, dass das Befestigungselement mehrere Vorsprünge aufweist, z. B. in Form mehrerer von einem Rand der Durchführöffnung abstehender Vorsprünge.

Der Vorsprung weist beispielsweise eine Spitze auf, die im montierten Zustand des Befestigungselementes an dem Verbindungselement anliegt oder sogar in das Material des Verbindungselements eingreift, so dass insbesondere bei Verwendung eines textilen Verbindungselementes ein besonders effizientes Festhalten des Verbindungselementes in der Durchführöffnung bewirkt wird. In einer Variante ist der Vorsprung in Draufsicht im Wesentlichen dreieckig gestaltet, d.h. er weist zwei von einer Grundseite (z.B. dem Rand der Durchführöffnung) aufeinander spitz zulaufende Seiten auf. Es ist auch möglich, dass die Spitze des Vorsprunges gerundet ausgebildet ist, um insbesondere einer Zerstörung des in die Durchführöffnung eingeführten Verbindungselementes des Gassacks vorzubeugen.

Die Durchführöffnung des Befestigungselementes besitzt beispielsweise einen durchgehenden Rand, d. h., es existiert keine Aussparung von einem Rand des Befestigungselementes zu der Durchführöffnung, über die das Verbindungselement in die Öffnung eingelegt werden kann, so dass das Verbindungselement durch die Durchführöffnung hindurchgefädelt werden muss.

Die Durchführöffnung des insbesondere aus einem Metall oder einem Kunststoff gebildeten Befestigungselementes wird beispielsweise durch Ausstanzen einer den Vorsprung aufweisenden Kontur hergestellt, so dass der Vorsprung einstückig mit dem übrigen Befestigungselement ausgebildet ist und einen Abschnitt des Randes der Durchführöffnung ausbildet. Des Weiteren ist es möglich, dass das Ausstanzen der Durchführöffnung nicht entlang einer geschlossenen Linie erfolgt, sondern der ausgestanzte Bereich des Befestigungselementes einen Abschnitt umfasst, der mit dem übrigen Befestigungselement verbunden bleibt. Der ausgestanzte Bereich wird also nicht von dem Befestigungselement entfernt, sondern lediglich laschenartig soweit abgebogen, dass ein Hindurchführen des Verbindungselements durch die Durchführöffnung problemlos möglich ist.

In einer weiteren Ausgestaltung der Erfindung weisen die Fixierungsmittel einen Abschnitt auf, der im motierten Zustand des Befestigungselementes die Befestigungsöffnung der Fahrzeugstruktur durchgreift und an einer Rückseite der Fahrzeugstruktur, die dem zu befestigenden Gassack abgewandt ist, anliegt. Beispielsweise entsteht der an der Rückseite anliegende Abschnitt des Befestigungselementes dadurch, dass ein Bereich (z. B. bei länglicher Ausgestaltung des Befestigungselementes ein Ende) des Befestigungselementes vom übrigen Befestigungselement abgebogen wird. Insbesondere wird der mit der Rückseite der Fahrzeugstruktur in Kontakt zu bringende Abschnitt so von dem übrigen Befestigungselement abgebogen, dass ein Bereich des Befestigungselements entsteht, der über einen Rand der Befestigungsöffnung der Fahrzeugstruktur geschoben werden kann und dabei gegen den Rand bzw. einem sonstigen Abschnitt der Fahrzeugstruktur vorgespannt ist.

Durch die Vorspannung drückt der Abschnitt des Befestigungselementes gegen die Rückseite und stellt somit insbesondere eine reibschlüssige Verbindung des Befestigungselementes mit der Fahrzeugstruktur her. Es ist auch möglich, dass der Rand der Befestigungsöffnung der Fahrzeugstruktur (oder ein sonstiger Bereich) Strukturen (insbesondere Ausnehmungen) aufweist, in die der an der Rückseite der Fahrzeugstruktur angeordnete Abschnitt der Fixierungsmittel eingreift und somit neben einer reibschlüssigen Verbindung auch eine formschlüssige Verbindung des Befestigungselementes mit der Fahrzeugstruktur realisiert.

Die Fixierungsmittel weisen neben dem Abschnitt, der im montierten Zustand des Befestigungselementes an einer Rückseite der Fahrzeugstruktur anliegt, insbesondere auch einen Abschnitt auf, der im montierten Befestigungselement an einer Vorderseite der Fahrzeugstruktur, die der Rückseite der Fahrzeugstruktur abgewandt ist, anliegt.

Insbesondere realisiert dieser an der Vorderseite anliegende Abschnitt der Fixierungsmittel eine form- und/oder kraftschlüssige Verbindung des Befestigungselementes mit der Vorderseite der Fahrzeugstruktur. Beispielsweise weist dazu der Rand der Befestigungsöffnung der Fahrzeugstruktur oder ein sonstiger Abschnitt der Fahrzeugstruktur eine Ausnehmung auf, in die eine Struktur des an der Vorderseite der Fahrzeugstruktur anliegenden Abschnitts der Fixierungsmittel eingreift.

Darüber hinaus kann der Abschnitt des Befestigungselementes, der an der Vorderseite der Fahrzeugstruktur anliegen soll, so ausgebildet, z. B. von dem übrigen Befestigungselement abgebogen, sein, dass er bei in der Befestigungsöffnung der Fahrzeugstruktur montiertem Befestigungselement gegen die Vorderseite der Fahrzeugstruktur vorgespannt ist und daher gegen diese drückt, so dass aufgrund der Reibung zwischen dem an der Vorderseite anliegenden Abschnitt und der Vorderseite einem Entfernen des Befestigungselementes aus der Befestigungsöffnung entgegengewirkt wird.

Insbesondere ist der mit der Vorderseite der Fahrzeugstruktur in Kontakt zu bringende Abschnitt des Befestigungselementes in Form einer vom übrigen Befestigungselement abgebogenen Lasche ausgebildet. Beispielsweise erstreckt sich dieser laschenförmige Abschnitt der Fixierungsmittel von einem Rand einer (von der Durchführöffnung verschiedenen Öffnung) des Befestigungselementes und wird insbesondere durch Ausstanzen eines Bereichs des Befestigungselementes hergestellt.

Darüber hinaus kann auch dieser, im montierten Zustand des Befestigungselementes an der Vorderseite der Fahrzeugstruktur anliegenden Abschnitt der Fixierungsmittel mindestens einen Vorsprung aufweisen, der z. B. in Form einer Spitze ausgebildet ist oder eine Sitze aufweist, die gegen die Vorderseite der Fahrzeugstruktur drückt und insbesondere eine zusätzlichen Formschluss zwischen dem Befestigungselement und der Fahrzeugstrukturvorderseite realisiert.

Insbesondere ist der Abschnitt der Fixierungsmittel, der an der Vorderseite der Fahrzeugstruktur anliegen soll, über eine Krümmung des Befestigungselementes mit dem Abschnitt der Fixierungsmittel, der an einer Rückseite der Fahrzeugstruktur anliegen soll, verbunden, d.h. die Fixierungsmittel sind nach Art einer Klammer ausgebildet, die an einem Rand der Befestigungsöffnung der Fahrzeugstruktur angeklemmt werden kann. Beispielsweise liegen die beiden Abschnitte näherungsweise einander gegenüber und erstrecken sich im Wesentlichen parallel zu der Fahrzeugstruktur.

In einer anderen Ausgestaltung der Erfindung weist das Befestigungselement mindestens eine weitere Durchführöffnung zum Durchführen des Verbindungselementes auf. Insbesondere kann die weitere Durchführöffnung dazu dienen, das Verbindungselement so durch die (eigentliche) Durchführöffnung hindurchzuführen, dass es fest an dem Vorsprung des Befestigungselementes anliegt. Beispielsweise umfasst das Befestigungselement zwei derartige weitere Durchführungsöffnungen.

Darüber hinaus kann das Befestigungselement mindestens eine Aussparung aufweisen, die von der (eigentlichen) Durchführöffnung und/oder einer weiteren Durchführöffnung des Befestigungselementes zu einem Rand des Befestigungselementes verläuft, so dass das Verbindungselement über den Rand und durch die Aussparung hindurch in die Durchführöffnung bzw. die weitere Durchführöffnung eingelegt werden kann, d. h. das Verbindungselement muss nicht durch die Durchführöffnung bzw. die weitere Durchführöffnuhg hindurchgefädelt werden. Der "Rand" des Befestigungselementes bezieht sich insbesondere auf eine Seite des Befestigungselementes, die senkrecht zu einer Ebene verläuft, entlang derer sich die Durchgangsöffnung bzw. die weitere Durchgangsöffnung erstreckt.

In einer Variante ist das Befestigungselement länglich ausgebildet und die Aussparung verläuft von einer Stirnseite eines Endes des Befestigungselementes zu einer weiteren, von der (eigentlichen) Durchführöffnung verschiedenen Durchführöffnung, so dass das Verbindungselement über die Stirnseite des Befestigungselementes in die weitere Durchführöffnung eingelegt werden kann. Beispielsweise erstreckt sich die Aussparung über nahezu die gesamte Breite (betrachtet quer zur Haupterstreckungsrichtung des Befestigungselementes), so dass ein Verbindungsband mit dem Befestigungselement zugewandter breiter Seite in die weitere Durchführöffnung hinein gedrückt werden kann. Die Breite der weiteren Durchführöffnung entspricht z.B. im Wesentlichen der Breite des Verbindungsbandes.

Insbesondere wird die Aussparung seitlich durch nasenartige Vorsprünge begrenzt, die ein Wiederherausrutschen des in die weitere Durchführöffnung eingelegten Verbindungsbandes verhindern. Darüber hinaus kann die Stirnseite des Befestigungselementes, die die weitere Durchführöffnung aufweist, gegenüber dem restlichen Befestigungselement abgewinkelt verlaufen; insbesondere derart, dass sie sich im montierten Zustand des Befestigungselementes von der Fahrzeugstruktur weg erstreckt.

Gemäß einer anderen Weiterbildung der Erfindung weist das Befestigungselement eine Aussparung auf, die von einem seitlichen Rand des Befestigungselementes zu einer weiteren Durchführöffnung verläuft, so dass das Verbindungsband über den Seitenrand des Befestigungselementes in die weitere Durchführöffnung eingeschoben werden kann. In dieser Variante wird das Verbindungsband also mit seinem Seitenrand zum Befestigungselement hin ausgerichtet und über die Aussparung in die weitere Durchführöffnung eingeschoben.

Des Weiteren kann die weitere Durchführöffnung eine Höhe (d. h. eine Ausdehnung quer zur Breite der Öffnung) aufweisen, die näherungsweise der doppelten oder dreifachen Dicke des mit dem Befestigungselement verwendeten Verbindungsbandes entspricht, so dass ein zwei- bzw. dreifach durch die weitere Durchführöffnung hindurch geführtes Verbindungsband in gewissem Maße zwischen einander gegenüberliegenden Rändern der weiteren Durchführöffnung eingeklemmt ist.

In einer weiteren Ausgestaltung der Erfindung weist das Befestigungselement eine erste und eine zweite weitere Durchführöffnung sowie eine erste und eine zweite Aussparung auf, wobei die erste Aussparung von einem seitlichen Rand des Befestigungselementes zu der ersten weiteren Durchführöffnung und die zweite Aussparung von einer Stirnseite eines Endes des Befestigungselementes zu der zweiten weiteren Durchführöffnung verläuft. Insbesondere ist das Befestigungselement hierbei länglich ausgebildet, d. h., es weist zumindest abschnittsweise (insbesondere im Bereich der Durchführöffnung) in einer Richtung (Längsrichtung) eine größere Ausdehnung auf als in einer Richtung (Breite) quer dazu. Der hier erwähnte "seitliche Rand" des Befestigungselementes erstreckt sich somit senkrecht zu einer durch die Längs- und Breitenrichtung des Befestigungselementes aufgespannten Ebene. Die "Stirnseite" des Befestigungselementes befindet sich insbesondere an einem Ende Befestigungselementes, während die Fixierungsmittel an dessen anderen Ende ausgebildet sind.

Die Erfindung betrifft auch eine Anordnung mit einem Gassack, einem wie oben beschriebenen Befestigungselement und einem durch die Durchführöffnung des Befestigungselementes hindurchgeführten Verbindungselement.

Des Weiteren betrifft die Erfindung ein Verfahren zum Befestigen eines Gassacks an einer Fahrzeugstruktur, das die Schritte aufweist:
- Bereitstellen eines Befestigungselementes, das mindestens eine Durchführöffnung, durch die ein Verbindungselement durchführbar ist, und mindestens einen Vorsprung aufweist und das einstückig ausgebildet ist;
- Hindurchführen eines Verbindungselementes, über das der Gassack mit der Fahrzeugstruktur verbunden werden soll, durch die Durchführöffnung derart, dass das Verbindungselement am dem Vorsprung anliegt und dadurch einem Herausziehen des Verbindungselementes aus der Durchführöffnung entgegengewirkt wird; und
- Einsetzen des Befestigungselementes in eine Befestigungsöffnung einer Fahrzeugstruktur.

Die Erfindung wird im Folgenden anhand von Ausführungsbeispielen unter Bezugnahme auf die Figuren näher erläutert. Es zeigen:
- Fig. 1 bis 5: unterschiedliche Ansichten eines Befestigungselementes gemäß einer ersten Ausführungsform der Erfindung;
- Fig. 6 und 7: unterschiedliche perspektivische Darstellungen eines Befestigungselementes gemäß einer zweiten Ausführungsform der Erfindung; und
- Fig. 8 bis 12: unterschiedliche Varianten der Anrodung eines Verbindungsbandes eines Gassacks an dem erfindungsgemäßen Befestigungselement.

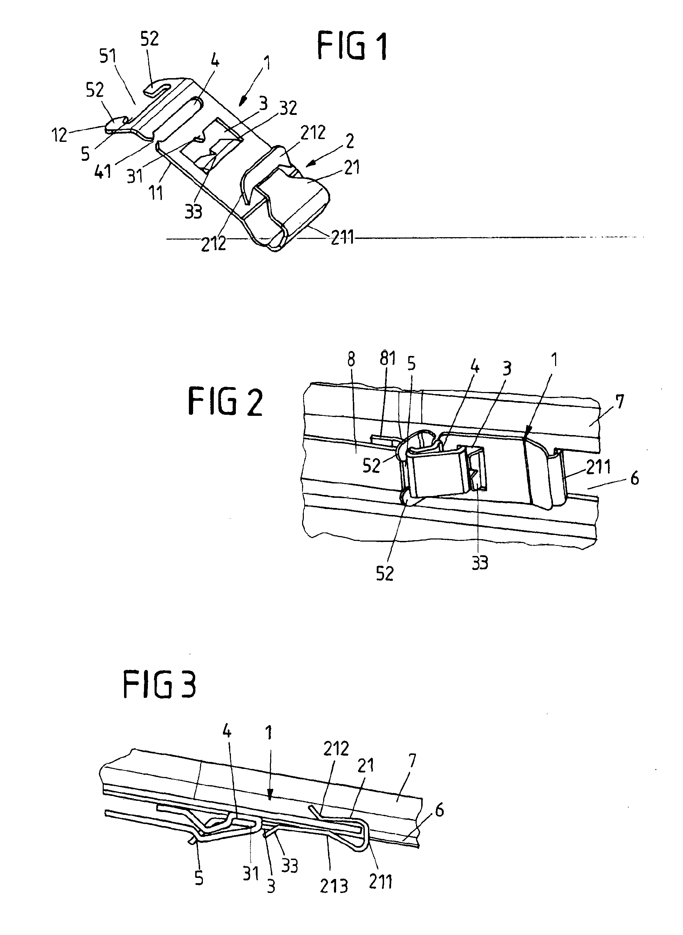

Das in den Figuren 1 bis 5 dargestellte erfindungsgemäße Befestigungselement 1 weist eine im Wesentlichen längliche Form auf, wobei an seinem einen Ende Fixierungsmittel 2 vorgesehen sind, über die das Befestigungselement 1 in einer Befestigungsöffnung einer Fahrzeugstruktur fixierbar ist; vgl. insbesondere Fig. 2 und 3, die das in einer Befestigungsöffnung 6 einer Fahrzeugstruktur 7 montierte Befestigungselement 1 zeigen. Auf die genaue Ausgestaltung der Fixierungsmittel wird noch weiter unten eingegangen.

Darüber hinaus weist das Befestigungselement 1 eine Durchführöffnung 3 auf, durch die ein Verbindungselement in Form eines Verbindungsbandes 8 (vergleiche Figuren 2 und 3), insbesondere zum Befestigen eines Vorhanggassacks an einer Fahrzeugstruktur, hindurchzuführen ist. Das Befestigungselement 1 weist des Weiteren einen zur Durchführöffnung 3 hin spitz zulaufenden Vorsprung 31 auf, der von einem Rand 32 der Durchführöffnung 3 absteht, genauer selber einen Abschnitt des Randes 32 ausbildet. Das Verbindungsband 8 ist so durch die Durchführöffnung 3 hindurchzuführen, dass es an dem Vorsprung 31 anliegt, so dass dieses insbesondere in das Verbindungsband eingreift oder sich zumindest in dieses hineindrückt, so dass einem Herausziehen des Verbindungsbandes aus der Durchführöffnung 3 entgegengewirkt wird.

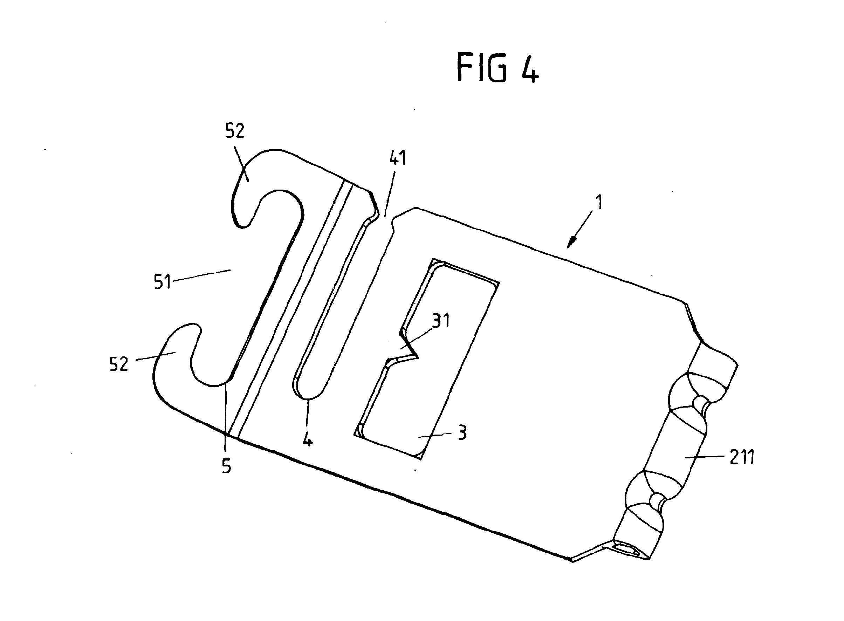

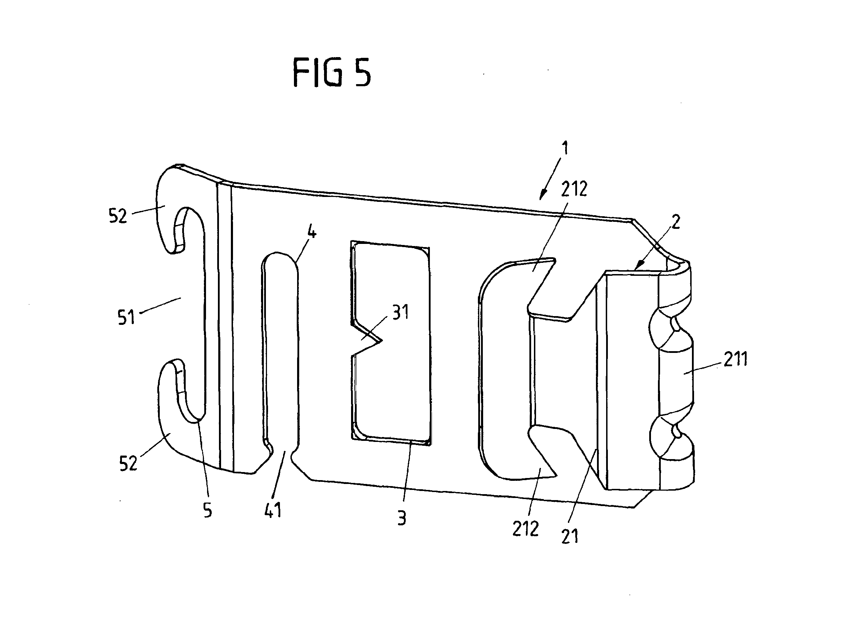

Der spitze Vorsprung 31 kann insbesondere durch Ausstanzen eines Materialbereiches 33 des Befestigungselementes hergestellt werden, wobei der ausgestanzte Bereich 33 an einem dem Vorsprung 31 gegenüberliegenden Seite der Öffnung 3 mit dem übrigen Befestigungselement verbunden bleibt und die Durchführöffnung 3 durch Abbiegen des Bereiches 33 erzeugt wird. Der Materialbereich 33 ist soweit von dem Rand der Durchführöffnung 3 abgebogen, dass das Hindurchführen des Verbindungsbandes durch die Durchführöffnung 3 nicht behindert wird. Insbesondere wird der Bereich 33 zu einer Seite des Befestigungselementes 1 hin abgebogen, die im montierten Befestigungselement der Fahrzeugstruktur abgewandt ist. Die Fig. 4 und 5 zeigen insofern eine Abwandlung der Fig. 1 bis 3, als die Öffnung 3 hier als komplette Ausstanzung hergestellt wurde, d.h. entlang einer durchgehenden Ausstanzlinie, ohne dass ein Abschnitt des Ausstanzbereiches mit dem Befestigungselement verbunden bleibt.

Das erfindungsgemäße Befestigungselement 1 weist neben der Durchführöffnung 3 eine erste weitere Durchführöffnung 4 sowie eine zweite weitere Durchführöffnung 5 auf. Zu der ersten weiteren Durchführöffnung 4 verläuft von einem Seitenrand 11 des Befestigungselementes eine Aussparung 41, durch die hindurch das Verbindungsband in die weitere Durchführöffnung 4 eingeschoben werden kann. Des Weiteren erstreckt sich von einer an einem Ende des Befestigungselementes ausgebildeten Stirnseite 12 des Befestigungselementes 1 eine Aussparung 51 zu der zweiten weiteren Durchführöffnung 5, über die das Verbindungsband in die zweite weitere Durchführöffnung 5 eingelegt werden kann.

Die Aussparung 51 weist eine Breite (quer zur Längserstreckung des Befestigungselementes) auf, die nahezu der Breite der zweiten weiteren Durchführöffnung 5 entspricht, so dass das Verbindungsband parallel zu dem Befestigungselement ausgerichtet in die Öffnung 5 hineingedrückt werden kann. Seitlich wird die Aussparung 51 durch Nasen 52 begrenzt, die gleichzeitig einen Abschnitt des Randes der zweiten weiteren Durchführöffnung 5 bilden, und die ein Wiederherausrutschen eines in die Durchführöffnung 5 eingelegten Abschnittes des Verbindungsbandes durch die Aussparung 51 verhindern.

Die Fixierungsmittel 2 sind nach Art einer Klammer ausgebildet und weisen einen Abschnitt 21 auf, der vom übrigen Befestigungselement 1 um etwa 180° abgebogen ist, das heißt der Abschnitt ist über eine entsprechende Krümmung 211 mit dem übrigen Befestigungselement 1 verbunden. Wie insbesondere in Figur 3 dargestellt, wird der Abschnitt 21 in eine Befestigungsöffnung 6 einer Fahrzeugstruktur 7 eingeführt und über einen Rand der Befestigungsöffnung 6 geschoben, bis eine Innenseite der Krümmung mit dem Rand der Befestigungsöffnung 6 in Kontakt kommt und der Abschnitt 21 an einer dem übrigen Befestigungselement 1 abgewandten Seite der Fahrzeugstruktur 7 anliegt.

Der Abschnitt 21 ist so gegenüber dem übrigen Befestigungselement abgebogen, dass er zum Aufschieben über den Rand der Befestigungsöffnung 6 gegenüber einem ihm gegenüberliegenden Abschnitt des Befestigungselementes wieder etwas weggebogen werden muss, wodurch er im montierten Zustand des Befestigungselementes vorgespannt gegen die Rückseite der Fahrzeugstruktur 7 drückt und somit eine formund/oder kraftschlüssige, insbesondere reibschlüssige, Verbindung des Abschnitts 21 mit der Rückseite der Fahrzeugstruktur 7 und damit des gesamten Befestigungselementes entsteht.

Insbesondere um eine zusätzliche formschlüssige Verbindung mit der Fahrzeugstruktur zu erzeugen, weist der Abschnitt 21 an seinem freien Ende einen ankerartigen Bereich auf, von dem sich zwei spitz auslaufende Vorsprünge 212 so erstrecken, dass die im montierten Zustand des Befestigungselementes an der Rückseite der Fahrzeugstruktur 7 anliegen. Gleichzeitig liegt ein den Vorsprüngen 212 gegenüberliegender Abschnitt 213 des Befestigungselementes an der Vorderseite der Fahrzeugstruktur an, so dass das Befestigungselement insbesondere über die Vorsprünge 212 und dem Abschnitt 213 an dem Randbereich der Befestigungsöffnung 6 angeklemmt ist.

Die Figuren 2 und 3 zeigen das Befestigungselement 1 aus Figur 1 mit eingeführtem Verbindungsband 8, über das ein Gassack (nicht dargestellt) an der Fahrzeugstruktur (zum Beispiel in Form eines Teiles der Fahrzeugkarosserie) befestigt wird. Zum Festlegen des Gassackbandes 8 an dem Befestigungselement 1 wurde dieses mit einem Ende zunächst durch die zweite weitere Öffnung 5 hindurchgeführt und dann von einer Vorderseite des Befestigungselementes 1, die im montierten Zustand des Befestigungselementes der Fahrzeugstruktur 7 abgewandt ist, durch die Durchführöffnung 3 gezogen, so dass das Band 8 an dem Vorsprung 31 anliegt.

Das durch die Durchführöffnung 3 hindurchgeführte Band 8 verläuft dann an einer Rückseite des Befestigungselementes 1 zur ersten weiteren Durchführöffnung 4, wird durch diese hindurchgeführt und tritt durch die zweite weitere Durchführöffnung 5 aus dem Befestigungselement aus, wobei das austretende Ende 81 des Verbindungsbandes 8 so durch die zweite weitere Durchführöffnung 5 verläuft, dass es zwischen einem in das Befestigungselement 1 eintretenden Abschnitt des Bandes 8 und dem Befestigungselement 1 verläuft. Das Band 8 ist somit zwischen den Nasen 52 und dem den Nasen 52 gegenüberliegenden Rand der zweiten weiteren Durchführöffnung 5 in gewissem Maße festgeklemmt. Insbesondere wird das Band 8 so in dem Befestigungselement 1 festgezurrt, dass der Vorsprung 31 in das Material des Bandes (z. B. ein textiles Gewebe) eingreift oder sich zumindest in das Material eindrückt, so dass ein Herausziehen (durch Ausüben einer Kraft entgegen der Einführrichtung des Bandes, das heißt in Richtung des zu befestigenden Gassacks) insbesondere während des Entfaltens des Gassacks verhindert bzw. weitgehend vermieden wird.

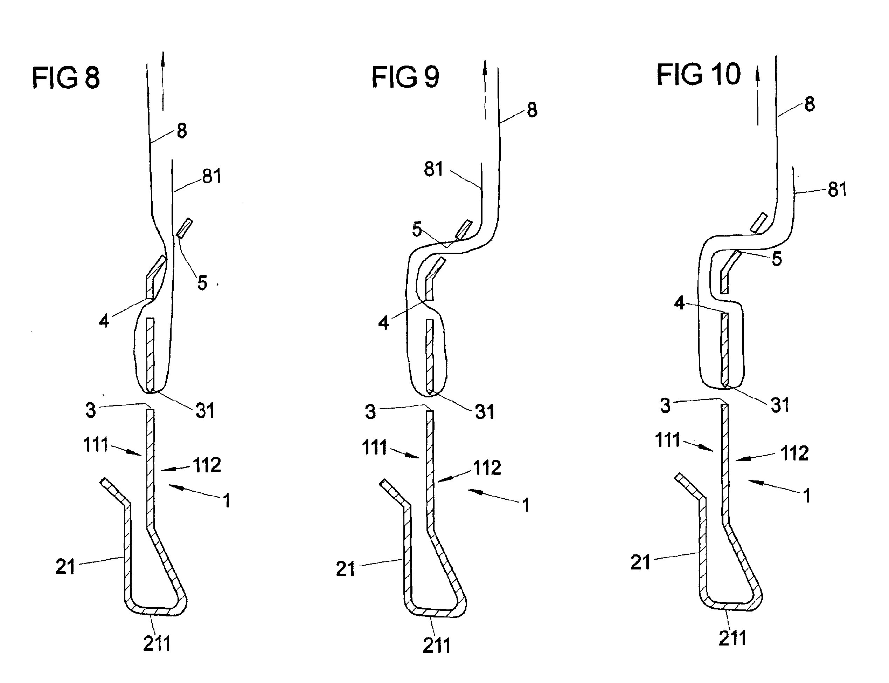

Es wird darauf hingewiesen, dass die in den Figuren 2 und 3 dargestellte Möglichkeit, das Verbindungsband 8 mit dem Befestigungselement 1 zu verbinden, nicht die einzige Möglichkeit ist, sondern selbstverständlich unterschiedliche Möglichkeiten existieren, das Band durch die Durchführöffnungen 3, 4 und 5 hindurchzuführen; vergleiche Figuren 8 bis 12, die beispielhaft andere Varianten darstellen.

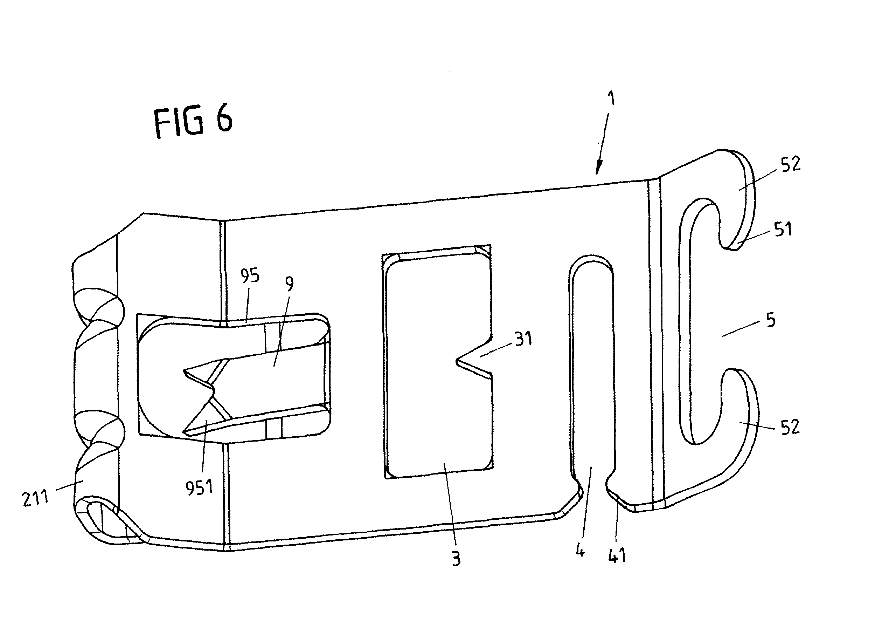

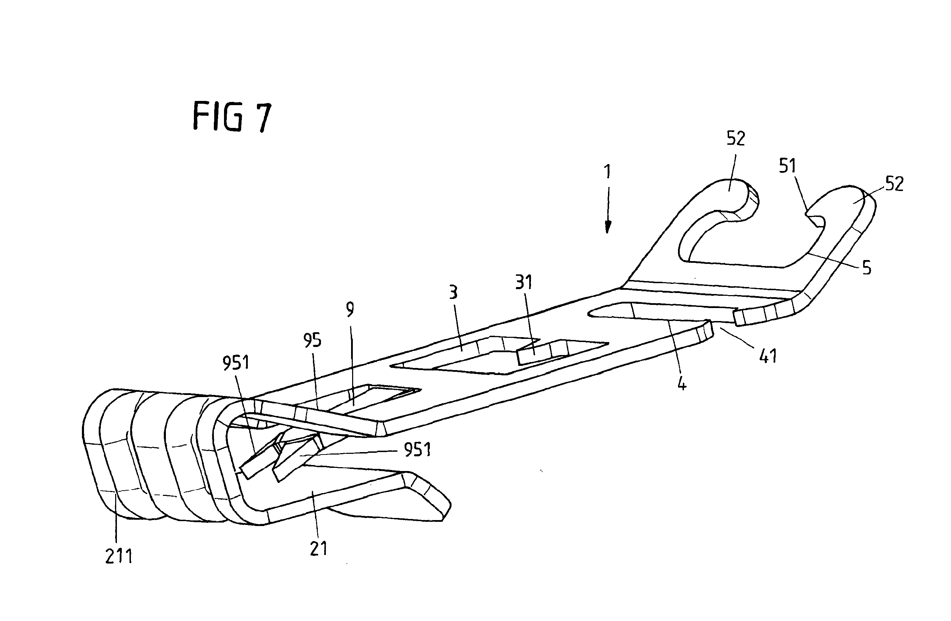

Die Figuren 6 und 7 zeigen zwei unterschiedliche perspektivische Darstellungen eines Befestigungselements 1 gemäß einer weiteren Ausführungsform der Erfindung. Das Befestigungselement 1 weist demnach entsprechend dem Befestigungselement der Figuren 1 bis 5 eine erste Durchführöffnung 3 mit einem Vorsprung 31 sowie eine erste und eine zweite weitere Durchführöffnung 4, 5 auf. Insbesondere ist der Bereich des Befestigungselementes 1, der zum Festlegen eines Verbindungsbandes dient, analog zu den Figuren 1 bis 5 ausgebildet.

Im Unterschied zu den Figuren 1 bis 5 weist das Befestigungselement gemäß den Figuren 6 und 7 jedoch Fixierungsmittel auf, die einen abstehenden Abschnitt 9 umfassen, der im montierten Zustand des Befestigungselementes 1 an einer Vorderseite der Fahrzeugstruktur anliegt. Der Abschnitt 9 wurde aus dem Befestigungselement frei geschnitten, so dass er von einem Rand einer Öffnung 95 laschenartig absteht und insbesondere vom Rand der Öffnung 95 so abgebogen ist, dass er im montierten Befestigungselement gegen die Vorderseite der Fahrzeugstruktur vorgespannt ist.

Der laschenartige Vorsprung 9 weist an seinem freien Ende spitz zulaufenden Zinken 951 auf, über die er im montierten Befestigungselement an der Vorderseite der Fahrzeugstruktur anliegt. Die Zinken 951 dienen insbesondere dazu, eine gewisse Verankerung des Vorsprungs 9 an der Vorderseite der Fahrzeugstruktur herzustellen, so dass einem Entfernen des Befestigungselementes aus der Befestigungsöffnung der Fahrzeugstruktur möglichst weitgehend entgegengewirkt wird. Es wird darauf hingewiesen, dass die Zinken nicht unbedingt spitz ausgebildet sein müssen. Es ist auch denkbar, dass sie mit einer im Wesentlichen planen Seite an der Vorderseite der Fahrzeugstruktur anliegen bzw. dass der Vorsprung gar keine Zinken aufweist.

Das Befestigungselement 1 weist darüber hinaus ähnlich wie das Befestigungselement gemäß dem ersten Ausführungsbeispiel einen vom übrigen Befestigungselement abgebogenen Abschnitt 21 auf, der im montierten Befestigungselement zumindest teilweise an einer Rückseite der Fahrzeugstruktur (nicht dargestellt) anliegt und der insbesondere so gegenüber dem übrigen Befestigungselement abgebogen ist, dass er im montierten Zustand vorgespannt gegen die Rückseite der Fahrzeugstruktur drückt. Allerdings weist der Abschnitt 21 der Figuren 6 und 7 keine Vorsprünge auf, sondern lediglich einem vom übrigen Befestigungselement abgewinkelten Endabschnitt, der eine Grifffläche bildet, über die der Abschnitt 21 vor dem Aufschieben auf den Rand der Befestigungsöffnung von dem gegenüberliegenden Abschnitt des Befestigungselementes weggebogen werden kann.

Die Figuren 8 bis 12 beziehen sich, wie erwähnt, auf unterschiedliche Möglichkeiten, das Verbindungsband 8 mit dem erfindungsgemäßen Befestigungselement 1 zu verbinden, wobei die Figuren 8 bis 12 jeweils Schnittansichten des Befestigungselementes und des Verbindungsbandes zeigen.

Die Figur 8 zeigt eine der Variante der Figur 2 ähnliche Möglichkeit, wonach das Verbindungsband von einer Vorderseite 112, die im montierten Zustand des Befestigungselementes der Fahrzeugstruktur abgewandt ist, des Befestigungselementes 1 kommend durch die Durchführöffnung 3 hindurchgeführt ist, so dass es an dem Vorsprung 31 fest anliegt. Das Band 8 verlässt durch die erste und die zweite weitere Durchführöffnung 4, 5 das Befestigungselement.

Eine Abwandlung des Verlaufes des Verbindungsbandes 8 durch die Öffnungen 3, 4 und 5 des Befestigungselementes 1 zeigt Figur 9. Danach wird das Band 8 von der Vorderseite 112 des Befestigungselementes in die vordere (zweite) weitere Durchführöffnung 5 eingeführt, läuft dann von einer der Vorderseite 112 abgewandten Rückseite 111 des Befestigungselementes 1 kommend durch die erste weitere Durchführöffnung 4 und durch die Durchführöffnung 3 hindurch, wobei es fest an dem Vorsprung 31 anliegt. Das freie Ende 81 des Gassackbandes 8 erstreckt sich dann an der Rückseite 111 des Befestigungselementes bis zur zweiten weiteren Durchführöffnung 5 und tritt durch diese hindurch aus dem Befestigungselement 1 aus.

Die Variante gemäß Figur 10 ähnelt der Figur 9, wobei das Band 8 nach Eintreten in das Befestigungselement durch die zweite weitere Durchführöffnung 5 entlang der Rückseite 111 des Befestigungselementes verläuft, um durch die Durchführöffnung 3 zur Vorderseite hindurch zu treten und bis zur ersten weiteren Durchführöffnung 4 entlang der Vorderseite 112 des Befestigungselementes zu verlaufen. Nach Durchlaufen durch die erste weitere Durchführöffnung 4 tritt das Band durch die zweite weitere Durchführöffnung 5 hindurch aus dem Befestigungselement 1 aus, wobei das freie Ende 81 des Bandes 8 außen liegt, d. h. der in das Befestigungselement 1 eintretende Abschnitt des Bandes 8 ist zwischen dem Befestigungselement 1 und dem freien Ende 81 angeordnet.

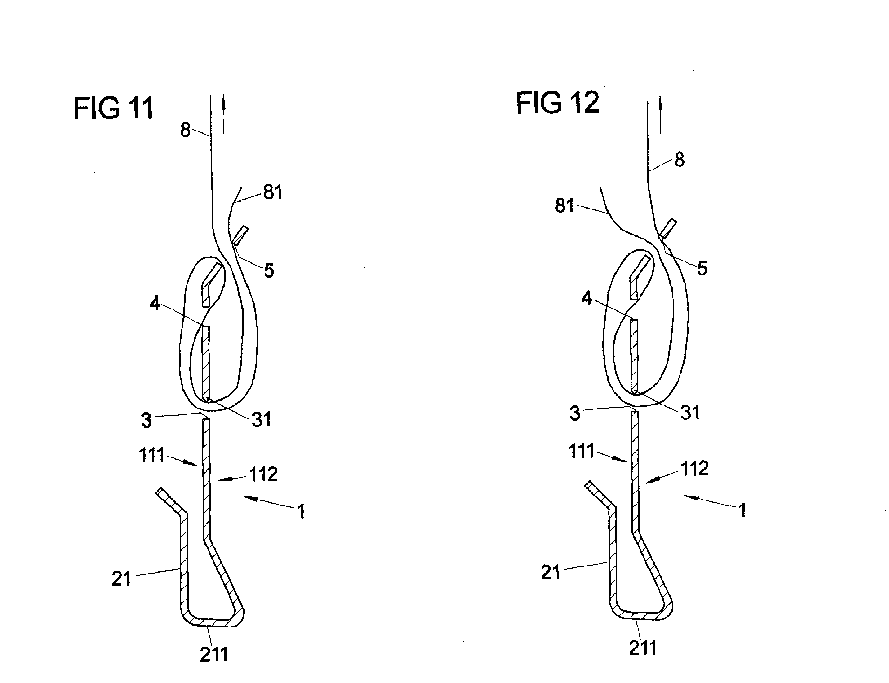

Gemäß Figur 11 wird das Band 8 zweimal durch die Durchführöffnung 3 durchgezogen, um eine möglichst stabile Verbindung des Bandes mit dem Befestigungselement zu erzielen. Genauer wird das Verbindungsband 8 zunächst durch die zweite weitere Durchführöffnung 5 in das Befestigungselement 1 eingeführt, verläuft dann entlang der Vorderseite 112 des Befestigungselementes bis zur Durchführöffnung 3 und durch diese hindurch. Danach wird das Band von der Rückseite 111 kommend durch die erste weitere Durchführöffnung 4 zur Vorderseite 112 geführt und anschließend durch die zweite weitere Durchführöffnung 5 gefädelt, um von der Rückseite 111 kommend noch einmal durch die Durchführöffnung 3 zu verlaufen und schließlich das Befestigungselement 1 durch die zweite weitere Durchführöffnung 5 hindurch zu verlassen.

Eine der Figur 11 ähnliche Variante zeigt Figur 12, wonach das Band 8 wiederum durch die zweite weitere Durchführöffnung 5 in das Befestigungselement eingeführt und entlang der Vorderseite 112 bis zur Durchführöffnung 3 geführt und durch diese hindurch gefädelt wird. Anschließend wird das Band entlang der Rückseite 111 bis zur zweiten weiteren Durchführöffnung 5 gezogen und durch diese und durch die erste weiter Durchführöffnung 4 hindurch noch einmal durch die Durchführöffnung 3 geführt und schließlich über die zweite weitere Durchführöffnung 5 aus dem Befestigungselement hinausgeführt.

Die Verwendung des erfindungsgemäßen Befestigungselementes ist natürlich nicht auf eine spezielle Variante des Durchfädelns des Verbindungsbandes 8 durch die Durchführöffnungen des Befestigungselementes beschränkt, sondern es können durchaus auch andere als die in den Figuren 8 bis 12 dargestellten Varianten verwendet werden. Des Weiteren wird darauf hingewiesen, dass Elemente der vorstehend beschriebenen Ausführungsbeispiele natürlich auch in Kombination miteinander verwendet werden können, z. B. ist es denkbar, die Fixierungsmittel des Befestigungselementes sowohl mit Vorsprüngen 212, die an einer Rückseite der Fahrzeugstruktur anliegen sollen, als auch mit einem Vorsprung 9, der an einer Vorderseite der Fahrzeugstruktur anliegen soll, auszustatten.

### Bezugszeichenliste

- 1: Befestigungselement
- 2: Fixierungsmittel
- 3: Durchführöffnung
- 4: erste weitere Durchführöffnung
- 5: zweite weitere Durchführöffnung
- 6: Befestigungsöffnung
- 7: Fahrzeugstruktur
- 8: Verbindungswand
- 9: laschenartiger Vorsprung
- 11: Seitenrand
- 12: Stirnseite
- 21: Abschnitt der Fixierungsmittel
- 31: Vorsprung
- 32: Rand
- 33: Ausstanzbereich
- 41: erste Aussparung
- 51: zweite Aussparung
- 52: Nase
- 81: freies Ende
- 95: Öffnung
- 111: Rückseite
- 112: Vorderseite
- 211: Krümmung
- 212: Vorsprung
- 213: Abschnitt
- 951: Vorsprung

## Patentansprüche

1. Befestigungselement zum Befestigen eines Gassacks eines Fahrzeuginsassen-Rückhaltesystems an einer Fahrzeugstruktur, mit
- Fixierungsmitteln (2), über die das Befestigungselement (1) in einer Befestigungsöffnung (6) der Fahrzeugstruktur (7) fixierbar ist; und
- mindestens einer Durchführöffnung (3) zum Hindurchführen eines Verbindungselementes (8), über das der Gassack mit der Fahrzeugstruktur (7) verbunden werden soll,
**gekennzeichnet durch**
mindestens einen Vorsprung (31), an dem ein **durch** die Durchführöffnung (3) hindurchgeführtes Verbindungselement (8) des Gassacks anliegt und der einem Herausziehen des Verbindungselementes (8) aus der Durchführöffnung (3) entgegenwirkt, wobei das Befestigungselement (1) einstückig ausgebildet ist.

2. Befestigungselement nach Anspruch 1, **dadurch gekennzeichnet, dass** der Vorsprung (31) von einem Rand (32) der Durchführöffnung (3) absteht oder einen Abschnitt eines Randes (32) der Durchführöffnung (3) ausbildet.

3. Befestigungselement nach Anspruch 1 oder 2, **dadurch gekennzeichnet, dass** sich der Vorsprung (31) zur Durchführöffnung (3) hin erstreckt.

4. Befestigungselement nach einem der vorhergehenden Ansprüche, **dadurch gekennzeichnet, dass** die Fixierungsmittel (2) nach Art einer Klammer ausgebildet sind, die an den Rand der Befestigungsöffnung (6) der Fahrzeugstruktur (7) anklemmbar ist.

5. Befestigungselement nach einem der vorhergehenden Ansprüche, **dadurch gekennzeichnet, dass**
- die Fixierungsmittel (2) einen Abschnitt (21) aufweisen, der im montierten Zustand des Befestigungselementes (1) die Befestigungsöffnung (6) der Fahrzeugstruktur (7) durchgreift und an einer Rückseite der Fahrzeugstruktur (7), die dem zu befestigenden Gassack abgewandt ist, anliegt, und/oder
- die Fixierungsmittel (2) einen Abschnitt (9) aufweisen, der im montierten Zustand des Befestigungselementes (1) an einer der Rückseite abgewandten Vorderseite der Fahrzeugstruktur (7) anliegt.

6. Befestigungselement nach Anspruch 5, **dadurch gekennzeichnet, dass** der an der Rückseite anliegende Abschnitt (21) und/oder der an der Vorderseite anliegende Abschnitt (9) der Fixierungsmittel (2) eine form- und/oder kraftschlüssige, insbesondere reibschlüssige, Verbindung der Fixierungsmittel (2) mit der Rück- bzw. Vorderseite der Fahrzeugstruktur (7) herstellt.

7. Befestigungselement nach Anspruch 5 oder 6, **dadurch gekennzeichnet, dass** der an der Rückseite anliegende Abschnitt (21) der Fixierungsmittel so vorgespannt ist, dass er im montierten Zustand des Befestigungselementes (1) gegen die Rückseite der Fahrzeugstruktur (7) drückt.

8. Befestigungselement nach einem der Ansprüche 5 bis 7, **dadurch gekennzeichnet, dass** der an der Vorderseite anliegende Abschnitt (9) der Fixierungsmittel (2) so vorgespannt ist, dass er im montierten Zustand des Befestigungselementes (1) gegen die Vorderseite der Fahrzeugstruktur (7) drückt.

9. Befestigungselement nach einem der Ansprüche 5 bis 8, **dadurch gekennzeichnet, dass** der an der Rückseite anliegende Abschnitt (21) und/oder der an der Vorderseite anliegende Abschnitt (9) der Fixierungsmittel (2) mindestens einen Vorsprung (212, 951) aufweist.

10. Befestigungselement nach einem der Ansprüche 5 bis 9, **dadurch gekennzeichnet, dass** das Befestigungselement (1) eine längliche Form aufweist und der an der Rückseite anliegende Abschnitt (21) der Fixierungsmittel (2) an einem gegenüber dem übrigen Befestigungselement (1) abgebogenen Ende des Befestigungselementes ausgebildet ist.

11. Befestigungselement nach einem der Ansprüche 5 bis 10, **dadurch gekennzeichnet, dass** der an der Vorderseite anliegende Abschnitt (9) der Fixierungsmittel laschenartig von dem übrigen Befestigungselement (1) absteht.

12. Befestigungselement nach einem der Ansprüche 5 bis 11, **dadurch gekennzeichnet, dass** der an der Vorderseite anliegende Abschnitt (9) der Fixierungsmittel (2) laschenartig von einem Rand einer von der Durchführöffnung (3) verschiedenen Öffnung (95) des Befestigungselementes (1) vorspringt.

13. Befestigungselement nach einem der vorhergehenden Ansprüche, **dadurch gekennzeichnet, dass** die Durchführöffnung (3) so beabstandet von den Fixierungsmitteln (2) angeordnet ist, dass sie im montierten Zustand des Befestigungselementes (1) beabstandet von der Befestigungsöffnung (6) der Fahrzeugstruktur (7) positioniert ist.

14. Anordnung aus einem Gassack, einem Befestigungselement (1) nach einem der vorhergehenden Ansprüche und einem durch die Durchführöffnung (3) des Befestigungselementes hindurchgeführten Verbindungselementes (8).

15. Verfahren zum Befestigen eines Gassacks an einer Fahrzeugstruktur, mit den Schritten:
- Bereitstellen eines Befestigungselementes (1), das mindestens eine Durchführöffnung (3) und mindestens einen Vorsprung (31) aufweist und das einstückig ausgebildet ist;
- Hindurchführen eines Verbindungselementes (8), über das der Gassack mit der Fahrzeugstruktur (7) verbunden werden soll, durch die Durchführöffnung (3) derart, dass das Verbindungselement (8) am dem Vorsprung (31) anliegt und dadurch einem Herausziehen des Verbindungselementes (8) aus der Durchführöffnung (3) entgegengewirkt wird; und
- Einsetzen des Befestigungselementes (1) in eine Befestigungsöffnung (6) einer Fahrzeugstruktur (7).

## Claims

1. Fastening element for fastening an airbag of a vehicle occupant restraint system to a vehicle structure with
- fixing means (2) via which the fastening element (1) can be fixed in a fastening opening (6) of the vehicle structure (7); and
- at least one feed-through opening (3) for feeding through a connecting element (8) via which the airbag is to be connected to the vehicle structure (7),
**characterized by**
at least one projection (31) against which a connecting element (8) of the airbag fed through the feed-through opening (3) rests and which counteracts the connecting element (8) from being pulled out of the feed-through opening (3), wherein the fastening element (1) is formed in one piece.

2. Fastening element according to claim 1, **characterized in that** the projection (31) projects from an edge (32) of the feed-through opening (3) or forms a section of an edge (32) of the feed-through opening (3).

3. Fastening element according to claim 1 or 2, **characterized in that** the projection (31) extends towards the feed-through opening (3).

4. Fastening element according to one of the proceeding claims, **characterized in that** the fixing means (2) are formed according to the type of a clamp, which can be clamped to the edge of the fastening opening (6) of the vehicle structure (7).

5. Fastening element according to one of the proceeding claims, **characterized in that**
- the fixing means (2) comprise a section (21), which reaches in the assembled status of the fastening element (1) through the fastening opening (6) of the vehicle structure (7) and rests against a back side of the vehicle structure (7), which faces away from the airbag to be fixed, and/or
- the fixing means (2) comprise a section (9), which rests in the assembled status of the fastening element (1) against a front side of the vehicle structure (7) facing away from the back side.

6. Fastening element according to claim 5, **characterized in that** the section (21) resting against the back side and/or the section (9) of the fixing means (2) resting against the front side form a form fitting and/or force fitting, in particular friction fitting, connection of the fixing means (2) to the back or front side of the vehicle structure (7).

7. Fastening element according to claim 5 or 6, **characterized in that** the section (21) of the fixing means resting against the back side is preloaded such that it presses in the assembled status of the fastening element (1) against the backside of the vehicle structure (7).

8. Fastening element according to one of the claims 5 to 7, **characterized in that** the section (9) of the fixing means (2) resting against the front side is preloaded such that it presses in the assembled status of the fastening element (1) against the front side of the vehicle structure (7).

9. Fastening element according to one of the claims 5 to 8, **characterized in that** the section (21) resting against the back side and/or the section (9) of the fixing means (2) resting against the front side comprises at least one projection (212, 951).

10. Fastening element according to one of the claims 5 to 9, **characterized in that** the fastening element (1) comprises a longitudinal shape and the section (21) of the fixing means (2) resting against the back side is being formed at an end of the fastening element being bent off relative to the remaining fastening element (1).

11. Fastening element according to one of the claims 5 to 10, **characterized in that** the section (9) of the fixing means resting against the front side projects flap like from the remaining fastening element (1).

12. Fastening element according to one of the claims 5 to 11, **characterized in that** the section (9) of the fixing means (2) resting against the front side projects flap like from an edge of an opening (95) of the fastening element (1) being different from the feed-through opening (3).

13. Fastening element according to one of the proceeding claims, **characterized in that** the feed-through opening (3) is spaced apart from the fixing means (2) such that it is positioned in the assembled status of the fastening element (1) spaced apart from the fastening opening (6) of the vehicle structure (7).

14. Arrangement of an airbag, a fastening element (1) according to one of the proceeding claims and a connecting element (8) fed through the feed-through opening (3) of the fastening element.

15. Method for fastening an airbag to a vehicle structure with the steps of:
- providing a fastening element (1), which comprises at least one feed-through opening (3) and at least one projection (31) and which is formed in one piece;
- feeding through a connecting element (8) via which the airbag is to be connected to the vehicle structure (7) through the feed-through opening (3), such that the connecting element (8) rests against the projection (31) and thus counteracts the connecting element (8) from being pulled out of the feed-through opening (3); and
- inserting the fastening element (1) into a fastening opening (6) of a vehicle structure (7).

## Revendications

1. Elément d'attache servant à attacher à une structure de véhicule un sac gonflable d'un système de retenue pour occupant de véhicule, comprenant
- des moyens de fixation (2), par l'intermédiaire desquels l'élément d'attache (1) peut être fixé dans une ouverture d'attache (6) de la structure de véhicule (7), et
- au moins une ouverture de passage (3) servant à faire passer à travers un élément de liaison (8), par l'intermédiaire duquel le sac gonflable doit être relié à la structure de véhicule (7),
**caractérisé par**
au moins une partie faisant saillie (31), au niveau de laquelle repose un élément de liaison (8) du sac gonflable, guidé à travers l'ouverture de passage (3), et laquelle empêche une sortie de l'élément de liaison (8) de l'ouverture de passage (3), l'élément d'attache (1) étant réalisé d'un seul tenant.

2. Elément d'attache selon la revendication 1, **caractérisé en ce que** la partie faisant saillie (31) dépasse d'un bord (32) de l'ouverture de passage (3) ou forme une section d'un bord (32) de l'ouverture de passage (3).

3. Elément d'attache selon la revendication 1 ou 2, **caractérisé en ce que** la partie faisant saillie (31) s'étend en direction de l'ouverture de passage (3).

4. Elément d'attache selon l'une quelconque des revendications précédentes, **caractérisé en ce que** les moyens de fixation (2) sont réalisés à la manière d'une pince, qui peut être bloquée par serrage au niveau du bord de l'ouverture d'attache (6) de la structure de véhicule (7).

5. Elément d'attache selon l'une quelconque des revendications précédentes, **caractérisé en ce que**
- les moyens de fixation (2) présentent une section (21), qui traverse, lorsque l'élément d'attache (1) se trouve dans l'état monté, l'ouverture d'attache (6) de la structure de véhicule (7) et qui repose au niveau d'un côté arrière de la structure de véhicule (7), qui est opposé au sac gonflable devant être attaché, et/ou
- les moyens de fixation (2) présentent une section (9), qui repose, lorsque l'élément d'attache (1) se trouve dans l'état monté, au niveau d'un côté avant, opposé au côté arrière, de la structure de véhicule (7).

6. Elément d'attache selon la revendication 5, **caractérisé en ce que** la section (21), reposant au niveau du côté arrière, et/ou la section (9), reposant au niveau du côté avant, des moyens de fixation (2) établissent une liaison par complémentarité de forme et/ou à force, en particulier par friction, entre les moyens de fixation (2) et le côté arrière ou le côté avant de la structure de véhicule (7).

7. Elément d'attache selon la revendication 5 ou 6, **caractérisé en ce que** la section (21), reposant au niveau du côté arrière, des moyens de fixation est précontrainte de telle manière qu'elle exerce une pression, lorsque l'élément d'attache (1) se trouve dans l'état monté, contre le côté arrière de la structure de véhicule (7).

8. Elément d'attache selon l'une quelconque des revendications 5 à 7, **caractérisé en ce que** la section (9), reposant au niveau du côté avant, des moyens de fixation (2) est précontrainte de telle manière qu'elle exerce, lorsque l'élément d'attache (1) se trouve dans l'état monté, une pression contre le côté avant de la structure de véhicule (7).

9. Elément d'attache selon l'une quelconque des revendications 5 à 8, **caractérisé en ce que** la section (21), reposant au niveau du côté arrière, et/ou la section (9), reposant au niveau du côté avant, des moyens de fixation (2) présentent au moins une partie faisant saillie (212, 951).

10. Elément d'attache selon l'une quelconque des revendications 5 à 9, **caractérisé en ce que** l'élément d'attache (1) présente une forme allongée, et **en ce que** la section (21), reposant au niveau du côté arrière, des moyens de fixation (2) est réalisée au niveau d'une extrémité, coudée par rapport au reste de l'élément d'attache (1), de l'élément d'attache.

11. Elément d'attache selon l'une quelconque des revendications 5 à 10, **caractérisé en ce que** la section (9), reposant au niveau du côté avant, des moyens de fixation dépasse à la manière d'une bride du reste de l'élément d'attache (1).

12. Elément d'attache selon l'une quelconque des revendications 5 à 11, **caractérisé en ce que** la section (9), reposant au niveau du côté avant, des moyens de fixation (2) fait saillie à la manière d'une bride d'un bord d'une ouverture (95), autre que l'ouverture de passage (3), de l'élément d'attache (1).

13. Elément d'attache selon l'une quelconque des revendications précédentes, **caractérisé en ce que** l'ouverture de passage (3) est disposée à distance des moyens de fixation (2) de telle manière qu'elle est positionnée, lorsque l'élément d'attache (1) se trouve dans l'état monté, à distance de l'ouverture d'attache (6) de la structure de véhicule (7).

14. Ensemble composé d'un sac gonflable, d'un élément d'attache (1) selon l'une quelconque des revendications précédentes et d'un élément de liaison (8) guidé de manière à traverser l'ouverture de passage (3) de l'élément d'attache.

15. Procédé servant à attacher un sac gonflable à une structure de véhicule, comprenant les étapes consistant à :
- fournir un élément d'attache (1), qui présente au moins une ouverture de passage (3) et au moins une partie faisant saillie (31) et qui est réalisé d'un seul tenant ;
- faire passer à travers l'ouverture de passage (3) un élément de liaison (8), par l'intermédiaire duquel le sac gonflable doit être relié à la structure de véhicule (7), de telle manière que l'élément de liaison (8) repose au niveau de la partie faisant saillie (31), ce qui permet d'empêcher une sortie de l'élément de liaison (8) de l'ouverture de passage (3) ; et
- insérer l'élément d'attache (1) dans une ouverture d'attache (6) d'une structure de véhicule (7).
